# EUROPEAN PATENT APPLICATION

(11) **EP 1 798 727 A2**
(43) Date of publication of application: **20.06.2007**
(21) Application number: 06126215.0
(22) Date of filing: 15.12.2006
(51) Int. Cl.: G11B 20/18

(54) **Method and apparatus for detecting/correcting defect area and related disk drive**

(30) Priority: 15.12.2005 KR 20050123989
(71) Applicant: Samsung Electronics Co., Ltd., Suwon-si, Gyeonggi-Do (KR)
(72) Inventor: Kim, Hwa-jun, Suwon-si Gyeonggi-do (KR)
(74) Representative: Grünecker, Kinkeldey, Stockmair & Schwanhäusser Anwaltssozietät

(57) **Abstract**

Provided is a method and apparatus for detecting and correcting a defect of a recording medium. The method includes: monitoring a gain variation of a variable gain amplifier (VGA) amplifying a signal detected from a recording medium; detecting a defect location based on the gain variation of the VGA; and performing error correction by determining the detected defect location as a location of a symbol of which the error occurrence is predicted.

## Description

### BACKGROUND OF THE INVENTION

### 1. Field of the Invention

The present invention relates to a method and apparatus for detecting and correcting a defect in recording medium. More particularly, the invention relates to a method and apparatus adapted to improve the correction capability of a disk drive in relation to a physical defect in a constituent disk.

### 2. Description of the Related Art

Hard disk drives (HDDs) are commonly used within various host devices, such as personal computers (PCs), as data storage devices. In general operation, HDDs allow data to be written to and read from recording medium (e.g., a disk having a surface subject to variation in its magnetic properties) using a magnetic read/write head. Data is stored on conventional disks in terms of bits per inch (BPI) - a recording density defined in relation to the disk's rotational direction, and tracks per inch (TPI) - a recording density defined in relation to the disk's radial direction. Significant research and development efforts are currently being expended to increase data recording density according to both of these definitions. Additionally, commercial demands are increasing for increasingly small HDDs. The increasing miniaturization of HDDs, together with demands for higher data recording densities, require ever finer mechanisms within HDD structures.

Unfortunately, it is not uncommon for the recording medium within an HDD to have a physical defect, such as a scratch. Thus, it is necessary to detect and compensate for the presence of such physical defects within the HDD's user environment. Various error detection and correction apparatuses have been proposed to facilitate this process. For example, data recorded on an HDD may be associated with error correction code (ECC). As is conventionally understood, ECC may be used to detect and correct data errors within a defined data sector. In this regard, ECC cannot correct data error that exceeds one-half the length of the ECC. For example, if 48-symbol ECC is used, defects having a maximum length of 24 symbols may be corrected. However, this correction capability is not location determinate. Thus, in conventional HDD systems, the location of a particular data error can not be accurately determined.

### SUMMARY OF THE INVENTION

Embodiments of the invention provide a defect area detection/correction method and apparatus adapted to improve the correction capability of an HDD. In one aspect, embodiments of the invention accurately identify the location of an error correction processing block containing a defect.

In one embodiment, the invention provides a detection/correction method comprising, detecting gain variation for a variable gain amplifier (VGA) receiving and amplifying a read signal related to recorded data, detecting a defect location in relation to the detected gain variation, and performing error correction in relation to the detected defect location.

In another embodiment, the invention provides a defect area detection/correction apparatus comprising; a variable gain amplifier (VGA) adapted to amplify a received read signal related to recorded data and apply a variable gain to the read signal in relation to a target level, a gain variation detector adapted to detect gain variation of the VGA, a defect location detector adapted to compare the detected gain variation to a predetermined threshold, and further adapted to generate a defect detection signal only when the detected gain variation is greater than the predetermined threshold, and an error correction processing unit adapted to perform error correction by determining a location associated with the defect detection signal as a location of a symbol at which the error occurrence is predicted.

In another embodiment, the invention provides a disk drive comprising; a disk storing data, a transducer adapted to read data from the disk, a read channel circuit adapted to amplify an analog read signal provided by the transducer by applying a variable gain to the read signal in relation to a target level, to convert the amplified read signal into digital data, to decode the digital data, and to detect a defect location in relation to based the variable gain, and a controller adapted to perform error correction on the decoded digital data in relation to the defect location.

### BRIEF DESCRIPTION OF THE DRAWINGS

Figure (FIG.) 1 is a plan view of a head disk assembly (HDA) within an HDD according to an embodiment of the invention;

FIG. 2 is a block level diagram illustrating an electrical circuit configuration of a disk drive to which a defect area detection/correction method and apparatus according to an embodiment of the invention are applied;

FIG. 3 is a block diagram of a read/write (R/W) channel circuit of FIG. 2;

FIG. 4 is a flowchart illustrating a defect area detection/correction method according to an embodiment of the invention; and

FIG. 5 shows a waveform diagram for a read signal, and an associated gain waveform.

### DESCRIPTION OF EMBODIMENTS

Embodiments of the invention will now be described in some additional detail with reference to the accompanying drawings. These embodiments are presented as teaching examples. The actual scope of the invention is not limited to only the illustrated embodiments.

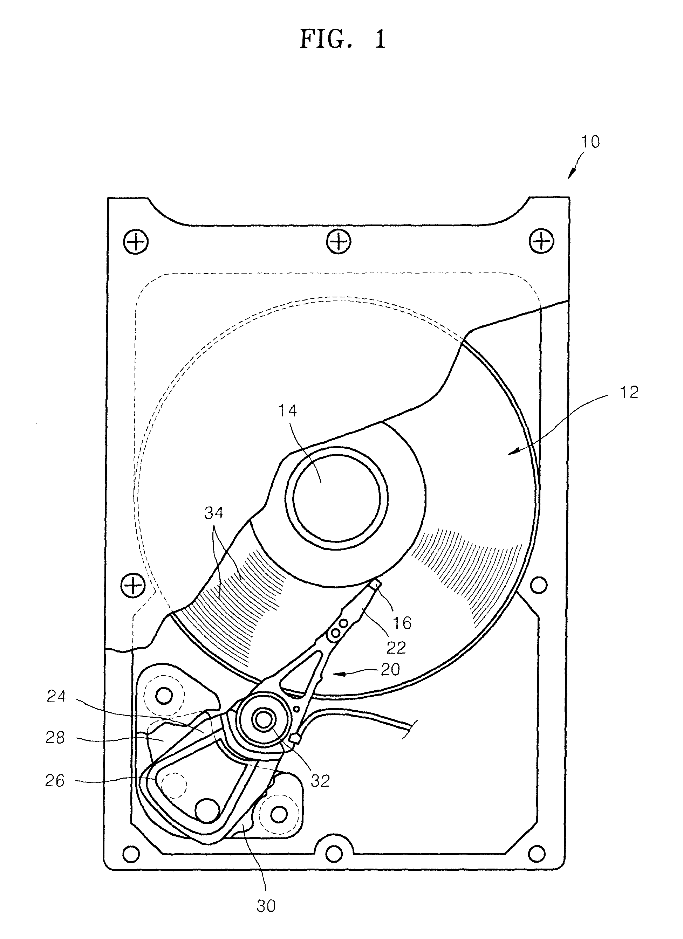

The exemplary hard disk drive (HDD) shown in FIG. 1 generally comprises a head disk assembly (HDA) including various mechanical components and related electrical circuits. Most of the conventionally understood aspects of this embodiment will not be discussed for the sake of brevity. However, relevant components will be described in their general association. The illustrated embodiment is adapted to store data on a rotating disk using a method that manages the storage area of the disk.

In the plan view of FIG. 1, an HDA 10 includes at least one magnetic disk 12 rotated by a spindle motor 14. HDA 10 also includes an electro-magnetic transducer (or read/write head) 16 floating over the surface of disk 12.

Transducer 16 is adapted to read data from and/or write data to disk 12 by sensing a magnetic field formed on the surface of disk 12, or selectively magnetizing portions of the surface of disk 12. As commonly configured, transducer 16 faces the surface of disk 12. Though a single transducer 16 is described in the illustrated example, multiple transducers may be used to read data from and/or write data to disk 12. Transducer 16 may take the form of a magneto-resistive (MR) component.

In the illustrated example, transducer 16 is combined with a slider 20. Slider 20 generates an air bearing (i.e., a cushion) between transducer 16 and the surface of disk 12. Slider 20 is further combined with a head gimbal assembly (HGA) 22. HGA 22 is attached to an actuator arm 24 associated with a voice coil 26.

Voice coil 26 is adjacent to and associated with a magnetic assembly 28 to form a voice coil motor (VCM) 30. Electrical current supplied to voice coil 26 generates a mechanical torque that rotates actuator arm 24 around a bearing assembly 32. The rotation of actuator arm 24 moves transducer 16 over the surface of disk 12.

Data is typically stored in annular tracks 34 (or cylinders) around disk 12. Each track 34 is further divided into a plurality of sectors. Each sector includes a data field and an identification field. The identification field may include gray code identifying sectors and tracks. The surface of disk 12 is also divided into user area(s) and a non-user area(s). User area(s) are areas adapted to store user data associated with read/write operations performed by the HDD. Non-user area(s) are areas adapted to store data information regarding the HDD and its particular properties.

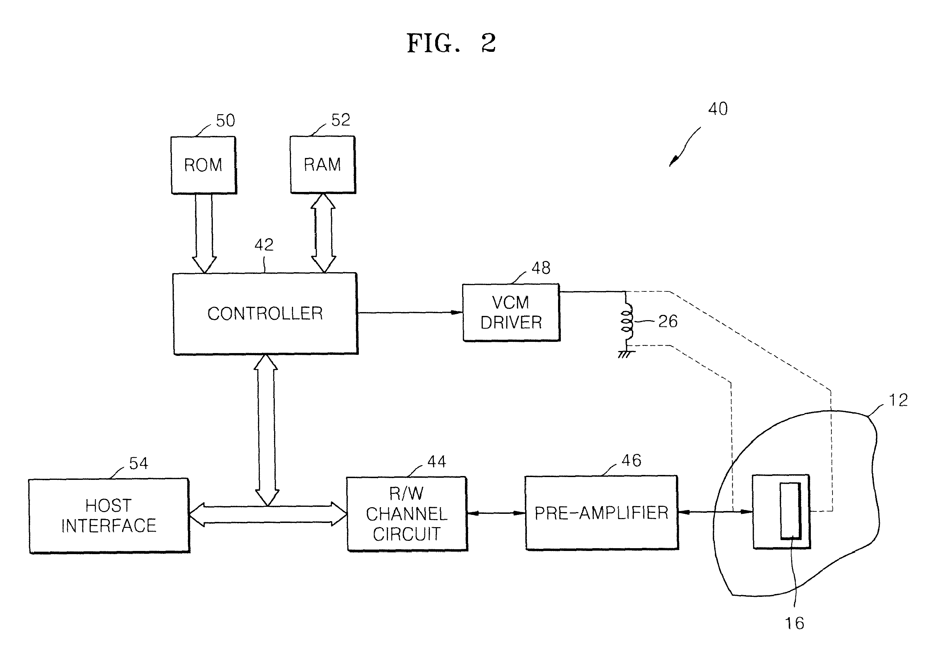

FIG. 2 is a block level diagram of an exemplary electrical system 40 adapted to control an HDD, such as the one illustrated in FIG. 1, according to an embodiment of the invention. Referring to FIG. 2, electrical system 40 includes a controller 42 connected to transducer 16 through a read/write (R/W) channel circuit 44 and a pre-amplifier 46.

Controller 42 may be implemented using a conventional digital signal processor (DSP), a microprocessor, or a micro-controller. Controller 42 controls R/W channel circuit 44 in such a manner that read/write operations are performed on disk 12 in response to various commands received from a host device via a host interface circuit 54.

Controller 42 is also connected to a VCM driver 48 adapted to supply a driving current to voice coil 26. Controller 42 also provides a control signal to VCM driver 48 which controls the movement of transducer 16.

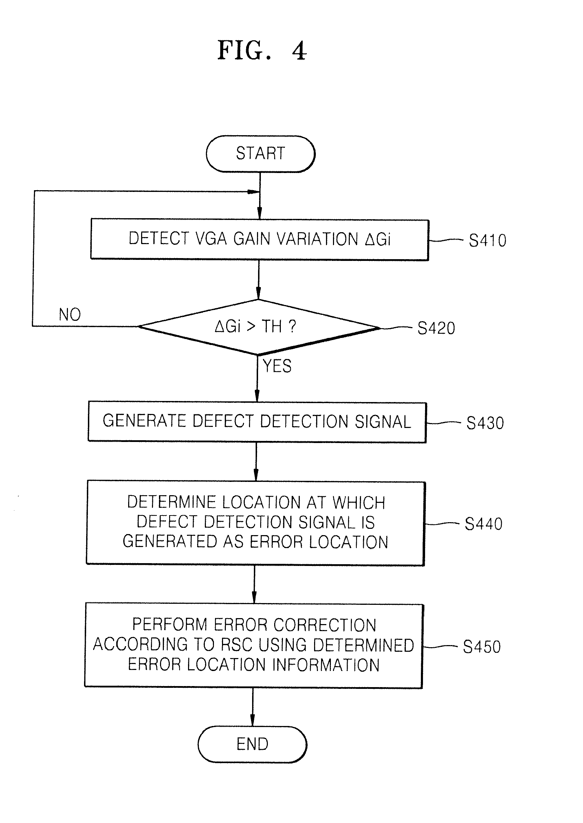

A Read Only Memory (ROM) 50 and/or a Random Access Memory (RAM) 52 may be used to store data defining control software that is run in conjunction with the operation of controller 42. (Alternatively, firmware may be used to implement control data). ROM 50 may also be used to store programs controlling the operation of a defect area detection/correction method according to an embodiment of the invention, as will be further discussed in relation to FIG. 4.

When power is supplied to the HDD, data indicating the nature and properties of the HDD may be read from a maintenance track located on disk 12. This maintenance and control data is loaded into memory (e.g., RAM 52) and used to control the general operation of the HDD.

For example, in a data read mode, the HDD amplifies an electrical signal developed by transducer 16 in relation to a detected magnetic field on the surface of disk 12. The resulting electrical signal is defined by the fixed gain value of pre-amplifier 46. R/W channel circuit 44 converts the "read signal" from the disk 12 into a digital signal in relation to a sector pulse signal generated by controller 42. In one embodiment, this conversion process generates a converted digital read signal using a run length limited (RLL) decoding method. In this example, the decoded digital read signal is then error-corrected by controller 42 using, for example, a conventional Reed Solomon Code (RSC) scheme. Once error corrected, the digital read signal is communicated to the host device via host interface circuit 54.

In a data write mode, the HDD receives data to be stored from the host device via host interface circuit 54. Controller 42 adds an error correction parity symbol based on an RSC scheme to the received "write data". R/W channel circuit 44 encodes the error correction parity symbol by adding data to fit a defined write channel using an RLL encoding method. Transducer 16 then writes the encoded write data on disk 12 in relation to a sector pulse using a write current amplified by pre-amplifier 46.

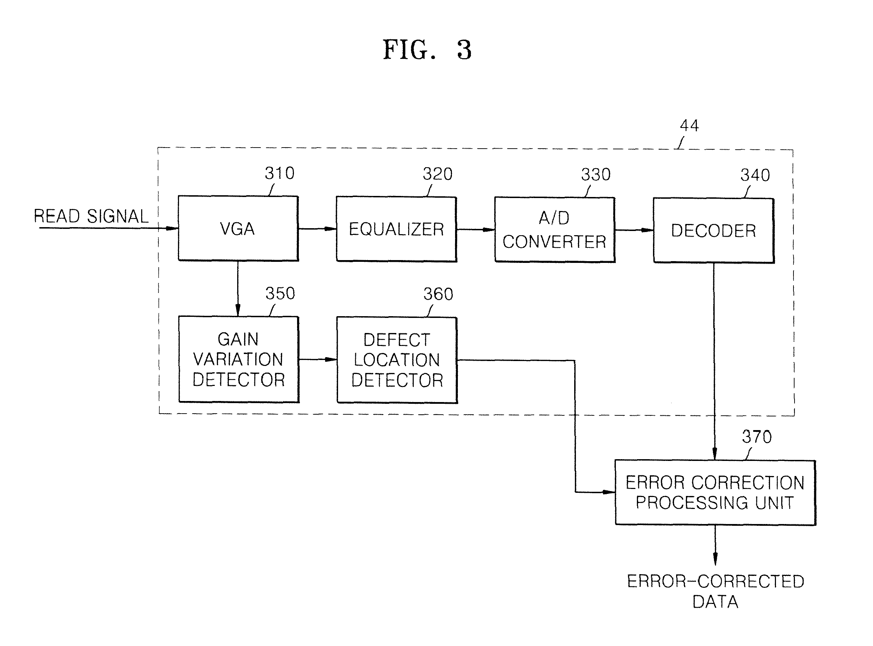

An exemplary embodiment further illustrating R/W channel circuit 44 and controller 42 will now be described in relation to the block level diagram shown in FIG. 3.

Referring to FIG. 3, the read channel circuit included in a defect area detection/correction apparatus according to an embodiment of the invention includes a variable gain amplifier (VGA) 310, an equalizer 320, an analog/digital (A/D) converter 330, a decoder 340, a gain variation detector 350, and a defect location detector 360. An error correction processing unit 370 is illustrated as being implemented by controller 42, but a separate dedicated control device might alternately be used.

VGA 310 amplifies a fixed-gain-amplified read signal provided by pre-amplifier 46 by varying the gain of VGA 310 in relation to a target level. Thus, as needed, the gain of VGA 310 is increased when the provided read signal is relatively weak, and is decreased when the provided read signal is relatively strong.

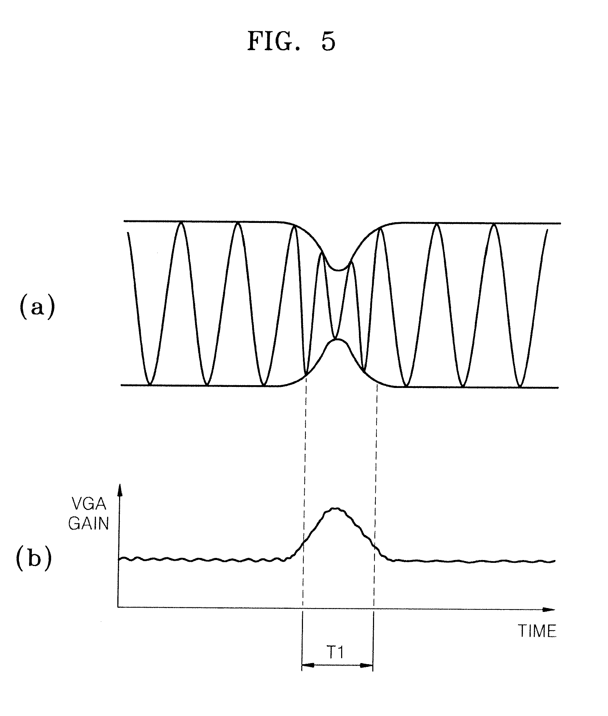

For example, if the read signal illustrated in FIG. 5A is applied to VGA 310, the gain provided by VGA 310 may look like the signal shown in FIG. 5B. Here, the gain of VGA 310 is increased during timer period T1 and maintained at a relatively constant level otherwise.

Equalizer 320 is adapted to compensate for any asymmetry of an input waveform and may be further adapted to adjust an input time delay and provide some noise reduction.

A/D converter 330 converts the equalized analog signal provide by equalizer 320 into a corresponding digital data. Decoder 340 then decodes the digital data using an RLL decoding method and provides decoded data to error correction processing unit 370.

Gain variation detector 350 detects any variation in the gain of VGA 310. Two methods of detecting the gain variation according to embodiments of the invention are suggested, but others may be used. In a first, the gain variation may be detected in relation to a calculated difference between the mean gain of VGA 310 with respect to a previous sample of the input signal, and the mean gain of VGA 310 with respect to a current sample. Alternately, the gain variation may be detected in relation to a calculated difference between the mean gain of VGA 310 with respect to the previous sample of the input signal and a maximum gain of VGA 310 with respect to the current sample. Using either approach, the reference of the gain variation is set to the mean gain of VGA 310 with respect to the previous sample of the input signal in order to accurately detect a defect area by reducing detection errors due to transient disturbances, such as spike noise.

Defect location detector 360 compares the gain variation detected by gain variation detector 350 to an initially set threshold, generates a defect detection signal only when the detected gain variation is greater than the threshold, and outputs the generated defect detection signal to error correction processing unit 370. Thus, as illustrated by the example shown in FIG. 5B, the defect detection signal may be generated during time period T1.

Error correction processing unit 370 may take the form of any computational device adapted to perform error correction, such as a method using RSC. RSC is code adapted to correct multiple random errors and can present a single symbol using multiple bits. RSC defines a symbol as a reference unit of correction.

An RS encoder (not shown, but may be implemented in software using controller 42) is a block generating a parity-check and generates a 2k-byte parity-check of with respect to a k-byte message. The generated parity-check is transmitted by being added to the k-byte message. The k-byte message is a polynomial of (k-1) order, and the parity-check is a polynomial corresponding to a remainder obtained by dividing a polynomial of k order by a generator polynomial defined in the RSC.

An RS decoder (not shown, it may be implemented in software using controller 42) calculates 2t syndromes. Each syndrome is a value corresponding to a remainder obtained by dividing a received polynomial by a root of the generator polynomial. If all of the 2t syndromes are 0, no error has occurred, and if any of the 2t syndromes is not 0, errors have occurred.

If errors have occurred, an error location polynomial and an error evaluation polynomial are obtained using the 2t syndromes. In this case, the maximum number of error correctable symbols is t.

However, if an error occurrence location can be accurately known, since an error evaluation polynomial for obtaining an error pattern can be generated using the 2t syndromes, the maximum number of error correctable symbols is 2t.

In the present invention, the maximum number of error correctable symbols is expanded using the principle of the RSC.

That is, the maximum number of error correctable symbols is expanded to 2t by determining a location at which the defect detection signal is generated as a location of a symbol of which the error occurrence is predicted using the defect detection signal generated by the defect location detector 360 and generating an error evaluation polynomial using the 2t syndromes.

FIG. 4 is a flowchart illustrating a defect area detection/correction method according to an embodiment of the invention.

Referring to FIG. 4, gain variation, Δ*Gi,* of VGA 310 is detected (S410). According to a first method of detecting the gain variation Δ*Gi,* the gain variation Δ*Gi* is detected by calculating a difference between a mean gain of VGA 310 with respect to a previous sample of an input signal and a mean gain of VGA 310 with respect to a current sample. According to a second method of detecting the gain variation, Δ*Gi,* the gain variation Δ*Gi* is detected by calculating a difference between the mean gain of VGA 310 with respect to the previous sample of the input signal and a maximum gain of VGA 310 with respect to the current sample.

The present invention is not limited to the two methods, and the gain variation ΔGi can be obtained using various methods.

The gain variation Δ*Gi* obtained by any competent method is then compared to a threshold *TH* (S420). The threshold *TH* is a value for determining an error occurrence boundary and can be obtained through experiments.

If the gain variation Δ*Gi* is not greater than the threshold *TH,* the gain variation of a subsequent sample is detected (return to S410). If, however, the gain variation Δ*Gi* is greater than the threshold *TH* , the read channel circuit generates a defect detection signal (S430).

Then, the location of the generated defect detection signal is determined as an error location (S440). That is, a location of a symbol included in a duration in which the defect detection signal is generated is determined as a location of a symbol of which an error has occurred.

An error pattern is then obtained by assigning all of syndromes generated using the RSC to obtain the error pattern, (S450), since the error location has been accurately determined. That is, an error evaluation polynomial for obtaining the error pattern is generated using all of the 2t syndromes. Thus, the maximum number of error correctable symbols is expanded to 2t.

As described above, according to embodiments of the present invention, by accurately searching for an error occurrence location by monitoring a gain variation of a VGA and performing error correction of the found error using RSC, an error correction performance can be improved. That is, since all of syndromes generated using the RSC can be assigned to obtain an error pattern, two times symbols can be corrected compared to the prior art.

Embodiments of the present invention have been illustrated in relation to various types of HDDs and various types of data storage devices.

The present invention may be implemented as a method, an apparatus, and/or a system. When the present invention is implemented in software, its component elements may take the form of programs or executable code segments. Programs or code segments may be stored in processor readable media and can be transmitted via a computer data signal that is combined with a carrier wave in a transmission medium or in a communication network. The processor readable medium can be any medium that can store or transmit data. Examples of the processor readable medium include electronic circuits, semiconductor memory devices, ROMs, flash memories, erasable ROMs (EROMs), floppy disks, optical disks, hard disks, optical fibers, radio frequency (RF) networks, etc. The computer data signal can be any signal that can be transmitted via transmission media, such as electronic network channels, optical fibers, air, an electronic field, RF networks, etc.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A defect area detection/correction method comprising:
detecting gain variation (5410, 5420, 5480) for a variable gain amplifier (VGA) receiving and amplifying a read signal related to recorded data;
detecting (5440) a defect location in relation to the detected gain variation; and
performing (5450) error correction in relation to the detected defect location.

2. The method of claim 1, wherein detecting a defect location comprises:
determining (5420) whether the detected gain variation is greater than a predetermined threshold; and
generating (5430) a defect detection signal if the gain variation is greater than the predetermined threshold.

3. The method of claim 2, wherein the gain variation (AGi) is detected as a difference between a mean gain of the VGA with respect to a previous sample and a mean gain of the VGA with respect to a current sample.

4. The method of claim 2, wherein the gain variation (AGi) is detected as a difference between a mean gain of the VGA with respect to a previous sample and a maximum gain of the VGA with respect to a current sample.

5. The method of claim 1, wherein the error correction uses all syndromes generated using Read Solomon Code (RSC) in order to obtain an error pattern.

6. A defect area detection/correction apparatus comprising:
a variable gain amplifier, VGA (310), adapted to amplify a received read signal related to recorded data and apply a variable gain to the read signal in relation to a target level;
a gain variation detector (350) adapted to detect gain variation (ΔGi) of the VGA;
a defect location detector (360) adapted to compare the detected gain variation (AGi) to a predetermined threshold, TH, and further adapted to generate a defect detection signal only when the detected gain variation is greater than the predetermined threshold; and
an error correction processing unit (370) adapted to perform error correction by determining a location associated with the defect detection signal as a location of a symbol at which the error occurrence is predicted.

7. The apparatus of claim 6, wherein the gain variation detector (350) is further adapted to detect gain variation (ΔGi) by calculating a difference between a mean gain of the VGA with respect to a previous sample and a mean gain of the VGA with respect to a current sample.

8. The apparatus of claim 6, wherein the gain variation detector (350) is further adapted to detect gain variation (ΔGi) by calculating a difference between a mean gain of the VGA with respect to a previous sample and a maximum gain of the VGA with respect to a current sample.

9. The apparatus of claim 6, wherein the error correction processing unit (370) uses all syndromes generated using Read Solomon Code (RSC) in order to obtain an error pattern.

10. A disk drive (10) comprising:
a disk (12) storing data;
a transducer (16) adapted to read data from the disk (12);
a read channel circuit (44) adapted to amplify an analog read signal provided by the transducer (16) by applying a variable gain to the read signal in relation to a target level, to convert the amplified read signal into digital data, to decode the digital data, and to detect a defect location in relation to based the variable gain; and
a controller (42) adapted to perform error correction according to any of previous claims 1 to 5 on the decoded digital data in relation to the defect location.

11. The disk drive of claim 10, wherein the read channel circuit (44) is connected to a pre-amplifier (46) adapted to apply a fixed gain to the read signal, and comprises
a variable gain amplifier, VGA (3, 10) adapted to apply the variable gain to the read signal received from the pre-amplifier;
a gain variation detector (350) adapted to detect the variable gain; and
a defect location detector (360) adapted to compare the variable gain to a predetermined threshold, and generate a defect detection signal only when the detected gain variation is greater than the predetermined threshold.

12. The disk drive of claim 11, wherein the gain variation detector (350) is further adapted to detect the variable gain by calculating a difference between a mean gain of the VGA with respect to a previous sample and a mean gain of the VGA with respect to a current sample.

13. The disk drive of claim 11, wherein the gain variation detector (350) is further adapted to detect the variable gain by calculating a difference between a mean gain of the VGA with respect to a previous sample and a maximum gain of the VGA with respect to a current sample.

14. The disk drive of claim 10, wherein the read channel circuit (44) is further adapted to detect an error location, and the controller (42) is adapted to use all syndromes generated using Read Solomon Code (RSC) in order to obtain an error pattern.
